# EUROPÄISCHE PATENTANMELDUNG

(11) **EP 3 254 843 A1**
(43) Veröffentlichungstag der Anmeldung: **13.12.2017**
(21) Anmeldenummer: 17174617.5
(22) Anmeldetag: 06.06.2017
(51) Int. Cl.: B32B 5/18, B32B 25/04, B32B 25/16, B32B 25/20, B32B 1/08, F16L 59/14

(54) **ISOLIERMANSCHETTE**

(30) Priorität: 06.06.2016 DE 202016003495 U
(71) Anmelder: ISOWA GmbH, 57258 Freudenberg (DE)
(72) Erfinder: Pieck, Paul Gerhard, 57078 Siegen-Geisweid (DE)
(74) Vertreter: advotec.

(57) **Zusammenfassung**

Isoliermanschette (10) für medienführende Leitungen, insbesondere Armaturen und Ventile, wobei ein Isolierkörper (11) der Isoliermanschette aus einem geschäumten ersten Isoliermaterial ausgebildet ist, wobei die Isoliermanschette um eine Leitung (15) gelegt für einen Durchtritt der Leitung ausgebildet ist, wobei die Isoliermanschette aus zwei im wesentlichen gleichen, voneinander getrennten und nach einem Umlegen um die Leitung aneinander befestigten Manschettenhälften (13) ausgebildet ist, wobei die Isoliermanschette an einer der Leitung zugewandten Innenfläche (20) des Isolierkörpers eine Lage aus einem weiteren Isoliermaterial aufweist, welches vergleichsweise temperaturbeständiger ist als das geschäumte erste Isoliermaterial des Isolierkörpers.

## Beschreibung

Die Erfindung betrifft eine Isoliermanschette für medienführende Leitungen, insbesondere Armaturen und Ventile, wobei ein Isolierkörper der Isoliermanschette aus einem geschäumten ersten Isoliermaterial ausgebildet ist, wobei die Isoliermanschette um eine Leitung gelegt für einen Durchtritt der Leitung ausgebildet ist, wobei die Isoliermanschette aus zwei im Wesentlichen gleichen, voneinander getrennten und nach einem Umlegen um die Leitung aneinander befestigten Manschettenhälften ausgebildet ist.

Derartige Isoliermanschetten sind beispielsweise aus der
DE 201 15 890 U1 bekannt und werden zur Isolierung von Armaturen, Ventilen oder Leitungsabschnitten medienführender Leitungen verwendet. Die bekannten Isoliermanschetten sind regelmäßig aus zwei Manschettenhälften ausgebildet, die an dem Leitungsabschnitt bzw. der Armatur oder dem Ventil befestigt werden können, so dass der Leitungsabschnitt oder Stutzen der Armatur bzw. des Ventils aus der Isoliermanschette austreten. Die Isoliermanschette umgibt folglich die Leitung und liegt mit Innenflächen eines Isolierkörpers der Isoliermanschette zumindest teilweise an einer Oberfläche der Leitung an. Der aus den Manschettenhälften gebildete Isolierkörper ist dabei regelmäßig so ausgebildet, dass ein Luftspalt zwischen der Oberfläche des Leitungsabschnitts, der Armatur oder dem Ventil möglichst klein ausgebildet ist. Die Isoliermanschette ist folglich einer Gestalt des Leitungsabschnitts, der Armatur oder dem Ventil angepasst.

Dadurch dass die Isoliermanschette an der Leitung anliegt, kann es insbesondere bei hohen Temperaturen der medienführenden Leitung zu einer Schrumpfung des geschäumten Isoliermaterials der Isoliermanschette kommen. Durch diese Schrumpfung verliert die Isoliermanschette ihre Isolierfähigkeit, so dass sogar unisolierte Bereiche entstehen können. Zwar ist beispielsweise geschäumtes Polyethylen prinzipiell ein gutes Isoliermaterial, jedoch ist dieses Isoliermaterial in einem Temperaturbereich > 100°C nicht mehr zur Ausbildung von Isoliermanschetten geeignet.

Der vorliegenden Erfindung liegt daher die Aufgabe zugrunde, eine Isoliermanschette vorzuschlagen, die gute Isoliereigenschaften aufweist und dennoch wärmebeständig ist.

Diese Aufgabe wird durch eine Isoliermanschette mit den Merkmalen des Anspruchs 1 gelöst.

Bei der erfindungsgemäßen Isoliermanschette für medienführende Leitungen, insbesondere Armaturen und Ventile, ist ein Isolierkörper der Isoliermanschette aus einem geschäumten ersten Isoliermaterial ausgebildet, wobei die Isoliermanschette um eine Leitung gelegt für einen Durchtritt der Leitung ausgebildet ist, wobei die Isoliermanschette aus zwei im Wesentlichen gleichen, voneinander getrennten und nach einem Umlegen um die Leitung aneinander befestigten Manschettenhälften ausgebildet ist, wobei die Isoliermanschette an einer der Leitung zugewandten Innenfläche des Isolierkörpers eine Lage aus einem weiteren Isoliermaterial aufweist, welches vergleichsweise temperaturbeständiger ist als das geschäumte erste Isoliermaterial des Isolierkörpers.

Die sonst mit einem Leitungsabschnitt, einer Armatur oder einem Ventil in Berührungskontakt stehenden Innenflächen des Isolierkörpers sind mit der Lage aus dem weiteren Isoliermaterial abgedeckt, so dass der Isolierkörper nicht mehr mit einer Oberfläche der Leitung in direkten Kontakt gelangen kann. Das Isoliermaterial der Lage ist temperaturbeständiger als das geschäumte erste Isoliermaterial des Isolierkörpers, weshalb das weitere Isoliermaterial im Vergleich zum geschäumten ersten Isoliermaterial erst bei höheren Temperaturen beschädigt werden kann. Gleichzeitig hat das weitere Isoliermaterial eine Isolationswirkung, durch die einen übermäßige Erwärmung des geschäumten ersten Isoliermaterial, und damit eine Beschädigung desselben, verhindert werden kann. Die Isoliermanschette wird dadurch auch für Temperaturbereiche einsetzbar, für die alleine das geschäumte erste Isoliermaterial nicht verwendbar wäre.

Das geschäumte erste Isoliermaterial kann Polyethylen, ein expandiertes Polystyrol, ein expandiertes Polypropylen, Ethylen-Propylen-Dien-Kautschuk, Nitrilkautschuk oder ein geschäumtes Polyurethan sein.

Das weitere Isoliermaterial kann bei einer Temperatur > 100°C bis 160°C bevorzugt in einem Bereich von 120°C bis 180°C, besonders bevorzugt bis 250°C, formstabil sein. Dadurch wird es dann auch möglich, die Isoliermanschette an Leitungsabschnitten, Armaturen oder Ventilen einzusetzen, deren Oberflächen diese Temperaturen erreichen können.

Beispielsweise kann das weitere Isoliermaterial ein Elastomer sein. Dadurch kann das weitere Isoliermaterial leicht verformt werden und dennoch seine ursprüngliche Gestalt wieder annehmen.

So kann das weitere Isoliermaterial auch ein Fluorkautschuk, ein Silikonkautschuk oder eine Mischung daraus sein. Fluorkautschuk bzw. Silikonkautschuk ist besonders temperaturbeständig. Alternativ kann auch ein Naturkautschuk anstelle von Fluorkautschuk oder Silikonkautschuk verwendet werden.

Die Lage kann als ein weiterer Isolierkörper ausgebildet sein. Das heißt, dass der weitere Isolierkörper unabhängig von dem Isolierkörper, beispielsweise mittels einer eigenen Form, ausgebildet werden kann. Es kann dann auch vorgesehen sein, mehrere weitere Isolierkörper mit einem Isolierkörper zu der Isoliermanschette zu kombinieren oder umgekehrt.

Der weitere Isolierkörper kann aus zwei im Wesentlichen gleichen, voneinander getrennten und nach einem Umlegen um die Leitung aneinander befestigten Innenhälften ausgebildet sein. Wie die Manschettenhälften können die Innenhälften voneinander getrennt oder zusammenhängend ausgebildet sein. Besonders vorteilhaft ist es, wenn die Innenhälften hinsichtlich ihrer Gestalt an die Manschettenhälften angepasst sind.

Der weitere Isolierkörper kann einen Verbindungsabschnitt aufweisen, der die Innenhälften miteinander verbindet. So ist es dann möglich, zwei Innenhälften zusammen mit dem Verbindungsabschnitt zu verbinden und diese zusammen in einer einzelnen Form auszubilden bzw. herzustellen. Der Verbindungsabschnitt kann darüber hinaus eine Schwächungslinie oder ein Filmscharnier aufweisen, so dass die Innenhälften relativ zueinander bewegt und um eine Leitung, ein Ventil oder eine Armatur herumgelegt werden können.

Vorteilhaft kann eine radiale Dicke des weiteren Isolierkörpers zumindest 1/2, bevorzugt zumindest 1/5, besonders bevorzugt zumindest 1/10 so groß wie eine radiale Dicke des Isolierkörpers sein. Der Isolierkörper kann demnach zumindest doppelt so dick sein wie der weitere Isolierkörper, wodurch es möglich wird, die besonders gute Isolierwirkung des geschäumten ersten Isoliermaterials auszunutzen. Wenn die Isolierwirkung des weiteren Isoliermaterials vergleichsweise geringer ist als die Isolierwirkung des geschäumten ersten Isoliermaterials ist es vorteilhaft, die Dicke des weiteren Isolierkörpers zugunsten der Dicke des Isolierkörpers soweit als möglich zu verringern. Die Dicke des weiteren Isolierkörpers kann dabei an eine zu erwartende Temperatur einer Oberfläche der Leitung angepasst werden.

Der weitere Isolierkörper kann formschlüssig mit dem Isolierkörper verbunden sein. Beispielsweise kann an dem weiteren Isolierkörper ein Vorsprung ausgebildet sein, der in den Isolierkörper eingreift. Der Isolierkörper kann auch eine oder mehrere Hinterschneidungen aufweisen, in die der weitere Isolierkörper mit einem Vorsprung einsetzbar ist. Auch ist es denkbar, dass zwischen dem Isolierkörper und dem weiteren Isolierkörper eine Rastverbindung durch Ausbildung von Rastelementen ausgebildet ist. Wenn der weitere Isolierkörper beispielsweise aus einem Elastomer ausgebildet ist, kann die formschlüssige Verbindung besonders einfach ausgebildet und auch wieder getrennt werden.

Die Lage kann auch stoffschlüssig mit dem Isolierkörper verbunden sein. Die stoffschlüssige Verbindung kann alleine oder auch ergänzend zu einer formschlüssigen oder einer kraftschlüssigen Verbindung ausgebildet werden. Durch die stoffschlüssige Verbindung ist dann sichergestellt, dass die Lage nicht von dem Isolierkörper getrennt werden kann.

So kann die Lage mit dem Isolierkörper durch Kleben oder Thermoverformen verbunden sein.

Die Lage kann auch kraftschlüssig mit dem Isolierkörper verbunden sein.

Zwischen den Manschettenhälften kann ein Filmscharnier ausgebildet sein. Die Manschettenhälften können dann besonders einfach gemeinsam in einer Form ausgebildet werden. Auch sind die Manschettenhälften dann stets immer miteinander verbunden und können leicht montiert werden. Die Isoliermanschette kann zumindest ein Sicherungselement umfassen, welches die Manschettenhälften miteinander verbinden kann. Das Sicherungselement kann beispielsweise ein sogenannter Kabelbinder oder auch ein Sicherungsring sein, der in eine Umfangsnut der Isoliermanschette eingesetzt werden kann. Weiter kann das Sicherungselement in Art einer Klammer ausgebildet sein, die in das geschäumte erste Isoliermaterial eingreift und die Manschettenhälften miteinander verbindet. Die Klammer kann einfach aus einem Kunststoffstreifen mit gekröpften Enden ausgebildet sein.

Die Isoliermanschette kann auf einer Außenseite mit einem in das erste Isoliermaterial eingreifenden Gitternetz versehen sein. Durch ein an der Außenseite der Isoliermanschette angebrachtes Gitternetz kann ein wirksamer Schutz der Außenseite gegenüber Beschädigungen, beispielsweise durch Stöße oder dergleichen, ausgebildet werden. Die Isoliermanschette erhält dann insgesamt eine robustere Oberfläche.

Nachfolgend wird eine bevorzugte Ausführungsform der Erfindung unter Bezugnahme auf die beigefügten Zeichnungen näher erläutert.

Es zeigen:
- **Fig. 1**: eine perspektivische Ansicht einer Isoliermanschette;
- **Fig. 2**: eine Seitenansicht der Isoliermanschette;
- **Fig. 3**: eine Draufsicht der Isoliermanschette.

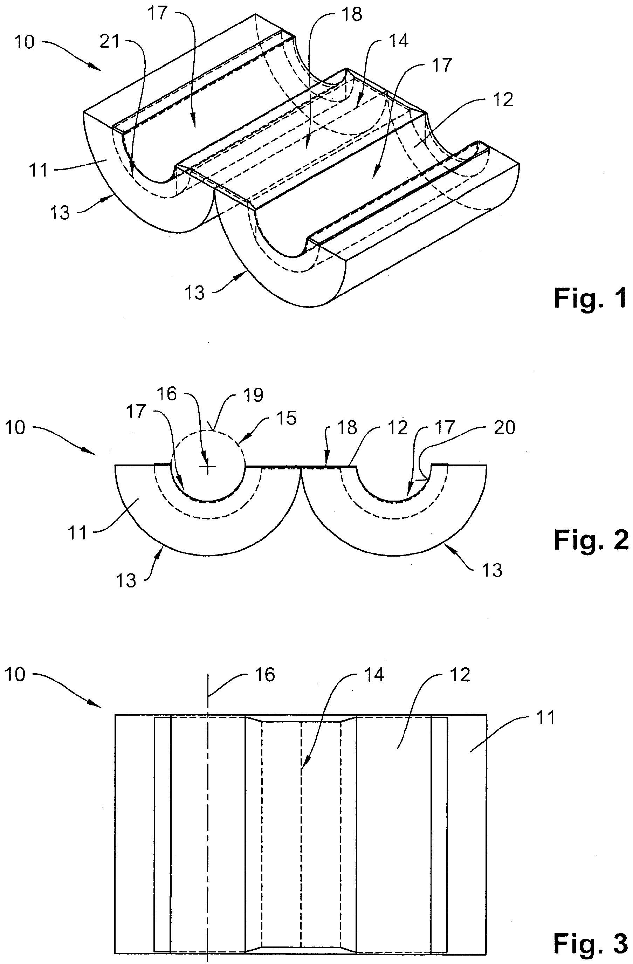

Eine Zusammenschau der **Fig. 1** bis **3** zeigt eine Isoliermanschette 10, die aus einem Isolierkörper 11 aus geschäumtem Polyethylen und einem weiteren Isolierkörper 12 ausgebildet ist. Der Isolierkörper 11 weist zwei Manschettenhälften 13 auf, die über ein Filmscharnier 14 miteinander verbunden sind. Die Manschettenhälften 13 können mittels des Filmscharniers 14 so gegeneinander verschwenkt werden, dass eine hier andeutungsweise dargestellte Leitung 15 von den Manschettenhälften 13 umgeben ist. Die Isoliermanschette 10 ist koaxial relativ bezogen auf eine Längsachse 16 zu der Leitung 15 ausgebildet. In anderen Ausführungsformen einer Isoliermanschette ist es auch möglich, diese hinsichtlich ihrer Gestalt an Leitungsabschnitte, Armaturen oder Ventile anzupassen.

Der weitere Isolierkörper 12 besteht aus einem Elastomer bzw. aus Fluorkautschuk und/oder Silikonkautschuk und weist zwei Innenhälften 17 auf, die über einen Verbindungsabschnitt 18 miteinander verbunden sind. Da der weitere Isolierkörper 12 elastisch verformbar ist, kann der weitere Isolierkörper 12 in den Verbindungsabschnitt 18 im Bereich des Filmscharniers 14 einfach geknickt werden. Ein Isoliermaterial des weiteren Isolierkörpers 12 ist vergleichsweise temperaturbeständiger als das Polyethylen des Isolierkörpers 11, so dass das Isoliermaterial auch eine Temperatur > 100°C ausgesetzt werden kann. Eine Oberfläche 19 der Leitung 15 kann sicher daher über 100°C erwärmen, ohne dass es zu einer Schrumpfung des Isolierkörpers 11 kommt. Innenflächen 20 der Innenhälften 17 können dabei dicht an der Oberfläche 19 anliegen. Die Innenhälften 17 sind in Ausnehmungen 21 in den jeweiligen Manschettenhälften 13 aufgenommen und können bei Bedarf auch mit dem Isolierkörper 11 verklebt sein.

## Patentansprüche

1. Isoliermanschette (10) für medienführende Leitungen, insbesondere Armaturen und Ventile, wobei ein Isolierkörper (11) der Isoliermanschette aus einem geschäumten ersten Isoliermaterial ausgebildet ist, wobei die Isoliermanschette um eine Leitung (15) gelegt für einen Durchtritt der Leitung ausgebildet ist, wobei die Isoliermanschette aus zwei im wesentlichen gleichen, voneinander getrennten und nach einem Umlegen um die Leitung aneinander befestigten Manschettenhälften (13) ausgebildet ist,
**dadurch gekennzeichnet,**
**dass** die Isoliermanschette an einer der Leitung zugewandten Innenfläche (20) des Isolierkörpers eine Lage aus einem weiteren Isoliermaterial aufweist, welches vergleichsweise temperaturbeständiger ist als das geschäumte erste Isoliermaterial des Isolierkörpers (11).

2. Isoliermanschette nach Anspruch 1,
**dadurch gekennzeichnet,**
**dass** geschäumte erste Isoliermaterial Polyethylen, Polystyrol, Polypropylen, Ethylen-Propylen-Dien-Kautschuk, Nitrilkautschuk oder Polyurethan ist.

3. Isoliermanschette nach Anspruch 1 oder 2,
**dadurch gekennzeichnet,**
**dass** das weitere Isoliermaterial bei einer Temperatur > 100 °C bis 160 °C, bevorzugt in einem Bereich von 120 °C bis 180 °C, besonders bevorzugt bis 250 °C formstabil ist.

4. Isoliermanschette nach einem der vorangehenden Ansprüche,
**dadurch gekennzeichnet,**
**dass** das weitere Isoliermaterial ein Elastomer ist.

5. Isoliermanschette nach Anspruch 4,
**dadurch gekennzeichnet,**
**dass** das weitere Isoliermaterial ein Fluorkautschuk, ein Silikonkautschuk oder eine Mischung daraus ist.

6. Isoliermanschette nach einem der vorangehenden Ansprüche,
**dadurch gekennzeichnet,**
**dass** die Lage als ein weiterer Isolierkörper (12) ausgebildet ist.

7. Isoliermanschette nach Anspruch 6,
**dadurch gekennzeichnet,**
**dass** der weitere Isolierkörper (12) aus zwei im Wesentlichen gleichen, voneinander getrennten und nach einem Umlegen um die Leitung (15) aneinander befestigten Innenhälften (17) ausgebildet ist.

8. Isoliermanschette nach Anspruch 6 oder 7,
**dadurch gekennzeichnet,**
**dass** der weitere Isolierkörper (12) einen Verbindungsabschnitt (18) aufweist, der die Innenhälften (17) miteinander verbindet.

9. Isoliermanschette nach einem der Ansprüche 6 bis 8,
**dadurch gekennzeichnet,**
**dass** eine radiale Dicke des weiteren Isolierkörpers (12) zumindest 1/2, bevorzugt zumindest 1/5, besonders bevorzugt zumindest 1/10 so groß wie eine radiale Dicke des Isolierkörpers (11) ist.

10. Isoliermanschette nach einem der Ansprüche 6 bis 9,
**dadurch gekennzeichnet,**
**dass** der weitere Isolierkörper (12) formschlüssig mit dem Isolierkörper (11) verbunden ist.

11. Isoliermanschette nach einem der vorangehenden Ansprüche,
**dadurch gekennzeichnet,**
**dass** die Lage stoffschlüssig mit dem Isolierkörper (11) verbunden ist.

12. Isoliermanschette nach Anspruch 11,
**dadurch gekennzeichnet,**
**dass** die Lage mit dem Isolierkörper (11) durch Kleben oder Thermoverformen verbunden ist.

13. Isoliermanschette nach einem der vorangehenden Ansprüche,
**dadurch gekennzeichnet,**
**dass** die Lage kraftschlüssig mit dem Isolierkörper (11) verbunden ist.

14. Isoliermanschette nach einem der vorangehenden Ansprüche,
**dadurch gekennzeichnet,**
**dass** zwischen den Manschettenhälften (13) ein Filmscharnier (14) ausgebildet ist.

15. Isoliermanschette nach einem der vorangehenden Ansprüche,
**dadurch gekennzeichnet,**
**dass** die Isoliermanschette (10) zumindest ein Sicherungselement umfasst, welches die Manschettenhälften (13) miteinander verbindet.

16. Isoliermanschette nach einem der vorangehenden Ansprüche,
**dadurch gekennzeichnet,**
**dass** die Isoliermanschette (10) auf einer Außenseite mit einem in das erste Isoliermaterial eingreifenden Gitternetz versehen ist.
